# EUROPÄISCHE PATENTSCHRIFT

(11) **EP 2 355 955 B1**
(45) Veröffentlichungstag und Bekanntmachung des Hinweises auf die Patenterteilung: **04.07.2012**
(21) Anmeldenummer: 09736152.1
(22) Anmeldetag: 15.10.2009
(51) Int. Cl.: B25J 9/10, B25J 9/12, H02K 41/035

(54) **PARALLELER ROBOTER DES SCARA-TYPS**
PARALLEL ROBOT OF THE SCARA TYPE
ROBOT PARALLÈLE DE TYPE SCARA

(30) Priorität: 10.11.2008 CH 18302008
(43) Veröffentlichungstag der Anmeldung: 17.08.2011
(73) Patentinhaber: ETEL S. A.., 2112 Môtiers (CH)
(72) Erfinder: STÄMPFLI, Hervé, F-25160 Oye et Pallet (FR); COLEMAN, Ralph, CH-2114 Fleurier (CH); BLANC, Didier, CH-1299 Crans-près-Céligny (CH)
(74) Vertreter: Pleyer, Hans Anno
(86) Internationale Anmeldenummer: PCT/EP2009/007398
(87) Internationale Veröffentlichungsnummer: WO 2010/051905

(56) Entgegenhaltungen:
- DE-A1-102005 036 282
- JP-A- 10 092 899
- US-A- 5 539 291

## Beschreibung

Die Erfindung betrifft einen parallelen Roboter des SCARA-Typs gemäß dem Oberbegriff des Anspruchs 1. Ein solcher Roboter ist z.B. aus der US-A-7 331 750 bekannt. Ein paralleler Roboter des SCARA-Typs kann in verschiedenen industriellen Anwendungen, insbesondere an Montagebändern, in Anlagen zur Verpackung oder Umhüllung beliebiger Elemente, in Anlagen, die dazu dienen, Einheiten oder Komponenten zu verlagern, auch in Anwendungen, in denen der Roboter an seinem Ende mindestens einen Sensor umfasst, und in Anwendungen zur maschinellen Bearbeitung oder zum Schweißen verwendet werden.

Unter einem parallelen Roboter des SCARA-Typs wird in allgemeiner Weise ein Roboter mit mindestens zwei Elementen verstanden, die jeweils aus einem Arm und einem Unterarm gebildet sind, die an zwei unabhängigen Trägern montiert sind, die um eine Drehachse rotatorisch beweglich sind, die theoretisch zusammenfallen, wobei die jeweiligen Enden der zwei Unterarme in gelenkiger Weise verbunden sind, so dass diese zwei Elemente somit eine geschlossene Schleife bilden, wobei jeder Unterarm relativ zum jeweiligen Arm zumindest um eine geometrische Achse rotatorisch beweglich ist. Es ist zu beachten, dass der Arm an seinem Träger befestigt ist, wobei diese zwei Elemente gemeinsam ein und denselben rotatorisch beweglichen Teil bilden und in bestimmten Fällen im Wesentlichen zusammenfallen können.

Im Allgemeinen tragen die äußeren Enden der zwei Unterarme einen Endteil mit einem Werkzeug oder einem beliebigen Sensor. Dieser Endteil kann sich in einer zur Drehachse der zwei Träger senkrechten Ebene verlagern. Die Winkelposition des Endteils wird durch eine identische Bewegung der zwei Träger modifiziert und der Abstand zwischen dem Endteil und der Drehachse wird durch eine differentielle Bewegung der zwei Träger modifiziert.

In einer Hauptvariante ist vorgesehen, dass der Endteil eine Verlagerung entlang der Richtung der Drehachse der zwei Träger bzw. der zwei vorstehend erwähnten Arme erfahren kann. In einer weiterentwickelten Variante ist vorgesehen, dass das Werkzeug oder der Sensor eine eigene Drehbewegung mit Hilfe eines Motors oder eines Aktors, der im Endteil angeordnet ist, erfahren kann.

In einer vereinfachten Ausführungsform eines parallelen Roboters des SCARA-Typs kann dieser Roboter folglich nur zwei gelenkige Elemente umfassen, die um einen Rumpf oder eine Basis dieses Roboters drehbar angebracht sind, wobei die Gelenke zwischen den Armen und den Unterarmen sowie das Gelenk, das dem Endteil zugeordnet ist, durch Drehpunkte mit Achsen gebildet sind, die zueinander parallel sind und zur geometrischen Drehachse der zwei beweglichen Träger parallel sind, die jeweils die zwei gelenkigen Elemente in einer bestimmten Ebene tragen.

Das Dokument US 7 331 750 beschreibt einen parallelen Roboter des SCARA-Typs mit relativ komplexem Entwurf. Dieser Roboter ist mit einem dritten gelenkigen Element entworfen, das es ermöglicht, den Endteil entlang einer Richtung zu bewegen, die zur Drehachse der zwei Arme des ersten und des zweiten gelenkigen Elements im Wesentlichen parallel ist. Somit weisen dieses erste und zweite gelenkige Element jeweils ein Gelenk zwischen ihrem Arm und ihrem Unterarm auf, das durch ein Kugelgelenk gebildet ist.

Die Arme des ersten und des zweiten gelenkigen Elements des Roboters des Dokuments US 7 331 750 sind jeweils an zwei ringförmigen Trägern angebracht, die jeweils die zwei Rotoren von zwei kreisförmigen übereinander gelagerten Motoren bilden. Jedes dieser zwei gelenkigen Elemente ist folglich einem individuellen kreisförmigen Motor zugeordnet, wobei die zwei kreisförmigen Motoren übereinander angeordnet sind. Erstens ist festzustellen, dass das erste und das zweite gelenkige Element keine symmetrische Struktur aufweisen, da die ringförmigen Träger der zwei jeweiligen Arme auf verschiedenen Höhen liegen. Dann stellt die Herstellung eines derartigen Roboters verschiedene Montageprobleme mit Auswirkungen auf die Funktion dieses Roboters dar. Es ist nämlich schwierig, die zwei Drehachsen der zwei ringförmigen Rotoren, die das erste bzw. das zweite gelenkige Element tragen, perfekt auszurichten. Dieses Problem der Ausrichtung der Drehachsen erzeugt in allgemeiner Weise einen Mangel an Präzision in der Steuerung des ersten und des zweiten gelenkigen Elements, was eine Verlagerung des Endteils außerhalb der zur Drehachse senkrechten Ebene erzeugt. Im speziellen Fall der vorher beschriebenen einfachen Variante, bei der die Gelenke durch Drehpunkte gebildet sind, erzeugt außerdem ein Ausrichtungsfehler der Drehachsen der zwei Rotoren Spannungen in diesen Drehpunkten und einen großen Verschleiß von diesen. Es ist noch zu beachten, dass der vorstehend beschriebene Roboter des Standes der Technik drei unabhängige Motoren umfasst, um Translationen des Endteils in einem zylindrischen Raum zu bewirken. Schließlich weist dieser Roboter eine komplexe und kostspielige Konstruktion auf.

Das Ziel der vorliegenden Erfindung besteht darin, die vorstehend erwähnten Nachteile des Standes der Technik zu beheben.

Dazu betrifft die vorliegende Erfindung einen parallelen Roboter des SCARA-Typs mit:
- einem Rumpf,
- zwei gelenkigen Elementen, die jeweils aus einem Arm und einem Unterarm gebildet sind, die durch ein Gelenk verbunden sind, wobei diese zwei gelenkigen Elemente um ein und dieselbe geometrische Achse drehbar angebracht sind,
- einem Endteil, mit dem in gelenkiger Weise die zwei jeweiligen äußeren Enden der zwei Unterarme verbunden sind, wobei dieser Roboter dadurch gekennzeichnet ist, dass die zwei gelenkigen Elemente jeweils an zwei ringförmigen Segmenten angebracht sind, die jeweils zwei bewegliche Teile eines kreisförmigen Motors bilden, dessen Stator zumindest teilweise den Rumpf bildet, wobei diese zwei beweglichen Teile ein und derselben Kreisbahn dieses Stators zugeordnet sind.

Gemäß einer bevorzugten Ausführungsform werden die zwei beweglichen Teile des kreisförmigen Motors durch ein und dieselbe Führung geführt. Durch die Eigenschaften des Roboters der vorliegenden Erfindung drehen sich die zwei beweglichen Teile um ein und dieselbe Drehachse, die durch ein und dieselbe Kreisbahn und insbesondere durch ein und dieselbe Führung definiert ist. Dann weist dieser Roboter relativ zum vorher erwähnten des Standes der Technik verringerte Abmessungen auf. Schließlich ist ein derartiger Roboter weniger komplex, besitzt eine vereinfachte Montage und ist folglich weniger kostspielig.

Weitere zusätzliche Merkmale und Vorteile des Roboters der vorliegenden Erfindung werden in der folgenden Beschreibung von verschiedenen Ausführungsformen der Erfindung dargelegt, die mit Bezug auf die beigefügten Zeichnungen durchgeführt wird, die als keineswegs begrenzende Beispiele gegeben werden und in welchen:
- Fig. 1: eine allgemeine perspektivische Ansicht einer ersten Ausführungsform eines erfindungsgemäßen Roboters ist;
- Fig. 2: eine Schnittansicht der ersten Ausführungsform entlang der Schnittlinie II-II der Fig. 1 ist;
- Fig. 3: eine teilweise Schnittansicht einer zweiten Ausführungsform eines erfindungsgemäßen Roboters ist;
- Fig. 4: eine teilweise Seitenansicht der zweiten Ausführungsform ist;
- Fig. 5: eine teilweise Schnittansicht einer dritten Ausführungsform des erfindungsgemäßen Roboters ist, und
- Fig. 6: eine teilweise Seitenansicht der dritten Ausführungsform ist.

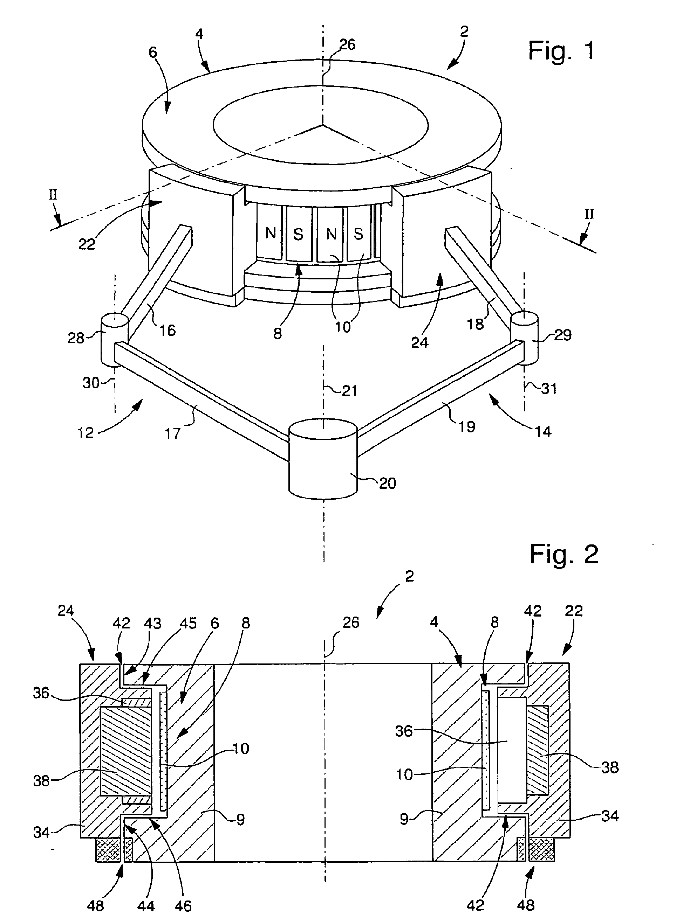

Eine erste Ausführungsform eines erfindungsgemäßen Roboters ist schematisch in den Fig. 1 und 2 dargestellt. Der parallele Roboter 2 des SCARA-Typs umfasst einen Rumpf 4, der aus einem Stator 6 und einem kreisförmigen Elektromotor gebildet ist. Der Stator 6 definiert eine Kreisbahn 8, die aus einem ringförmigen Magnetjoch 9 gebildet ist, an dessen äußerer seitlicher Oberfläche eine Vielzahl von Permanentmagneten 10 angeordnet sind, die abwechselnde Polaritäten aufweisen. Der Roboter 2 umfasst dann zwei gelenkige Elemente 12 und 14, die jeweils aus einem Arm 16 bzw. 18 und einem Unterarm 17 bzw. 19 gebildet sind. Die jeweiligen zwei äußeren Enden der zwei Unterarme 17 und 19 sind in gelenkiger Weise mit einem Endteil 20 (in Fig. 1 in schematischer Weise dargestellt) verbunden. Dieser Endteil trägt im Allgemeinen entweder ein Werkzeug oder einen Sensor.

Gemäß der Erfindung sind die zwei gelenkigen Elemente jeweils an zwei ringförmigen Segmenten 22 und 24 angebracht, die jeweils zwei bewegliche Teile eines kreisförmigen Motors bilden, der aus diesen zwei ringförmigen Segmenten und dem Stator 6 gebildet ist. Gemäß der Erfindung sind die zwei beweglichen Teile 22 und 24 ein und derselben Kreisbahn 8 dieses Stators 6 zugeordnet.

Somit sind die zwei ringförmigen Segmente 22 und 24 um ein und dieselbe Drehachse 26 rotatorisch beweglich. Diese Achse 26 ist durch die Kreisbahn 8 definiert, die im vorliegenden Beispiel ein magnetischer Weg ist, da er die Permanentmagnete des kreisförmigen Motors trägt. Die Drehachse 26 entspricht der Achse der maschinellen Bearbeitung der äußeren seitlichen Oberflächen des Magnetjochs 9 des Stators, insbesondere den zylindrischen Oberflächen 43 und 44, die als Führungsoberfläche für die ringförmigen Segmente dienen. Da die zwei ringförmigen Segmente entlang desselben kreisförmigen magnetischen Weges 8 beweglich sind, indem sie sich an derselben Führungsoberfläche abstützen, wird sichergestellt, dass sich diese zwei Segmente um ein und dieselbe geometrische Achse 26 drehen.

Die zwei gelenkigen Elemente 12 und 14 können somit in ein und derselben Ebene liegen, die zur Drehachse 26 senkrecht ist. Der Arm und der Unterarm von jedem gelenkigen Element sind durch ein Gelenk 28 bzw. 29 verbunden. In den hier beschriebenen Ausführungsformen der Erfindung sind diese Gelenke 28 und 29 durch Drehpunkte mit jeweiligen Drehachsen 30 und 31 gebildet, die zueinander und auch zur Drehachse 26 parallel sind und zur Richtung der Drehachse(n) der Gelenkmittel, die dem Endteil 20 zugeordnet sind, parallel sind, die hier auch aus einem oder mehreren Drehpunkten (schematisch durch die Achse 21 in Fig. 1 dargestellt) gebildet sind.

Die zwei beweglichen Teile 22 und 24 umfassen jeweils einen Träger 34, in dem eine Vielzahl von Spulen 36 und ein ferromagnetisches Stück 38 angeordnet sind, das zum Schließen des Magnetflusses der Permanentmagnete 10 dient. Außerdem dient dieses ferromagnetische Stück 38 gemäß einem speziellen Merkmal der Erfindung auch zum Erzeugen einer magnetischen Anziehungskraft zwischen dem beweglichen Teil und der Kreisbahn 8 mit der Vielzahl von Permanentmagneten. Somit wird jedes ringförmige Segment, das einen beweglichen Teil bildet, durch die magnetische Anziehungskraft vorgespannt. Dies stellt einen Vorteil für die Montage und die Funktion des Roboters gemäß der vorliegenden Erfindung in Bezug auf den Roboter des Standes der Technik dar, bei dem die drehbaren Träger, an denen die gelenkigen Elemente angebracht sind, durch starre Ringe gebildet sind. In einem derartigen Ring, der den beweglichen Teil eines kreisförmigen Motors bildet, sind die Spulen im Allgemeinen mit einer axialen Symmetrie ebenso wie die eventuellen Magnetkerne angeordnet. In einem derartigen Fall ist somit die resultierende magnetische Anziehungskraft am beweglichen Ring im Wesentlichen null.

Da die zwei beweglichen Teile 22 und 24 drehbar auf ein und derselben Kreisbahn des Stators angebracht sind, ist es gemäß der Erfindung möglich, diese zwei beweglichen Teile des kreisförmigen Motors durch ein und dieselbe Führung zu führen. Diese Führung 42 ist vorzugsweise aus einem Luftlager gebildet, das einerseits durch zylindrische Oberflächen 43 und 44 des Stators 6, dem entsprechende zylindrische Oberflächen des Trägers 34 des beweglichen Teils zugewandt sind, und andererseits durch ringförmige Oberflächen 45 und 46 des Stators, denen entsprechende ringförmige Oberflächen des Trägers 34 dieses beweglichen Teils zugewandt sind, definiert ist. Die komprimierte Luft füllt in klassischer Weise einen Zwischenraum zwischen den Oberflächen 43, 44, 45, 46 und den entsprechenden Oberflächen des beweglichen Teils 22 bzw. 24. Somit hält das Luftlager 42 einerseits den beweglichen Teil, der die magnetische Anziehungskraft der Magnete erfährt, in einem gewissen Abstand von der äußeren kreisförmigen Oberfläche des Stators und positioniert andererseits den beweglichen Teil genau entlang der Richtung der Drehachse 26, die zur maschinellen Bearbeitung gedient hat.

Schließlich ist jedes ringförmige Segment 22, 24 einer Vorrichtung 48 zur Messung der Winkelverlagerung des ringförmigen Segments, d. h. der Verlagerung dieses Segments entlang der Kreisbahn des Stators, zugeordnet.

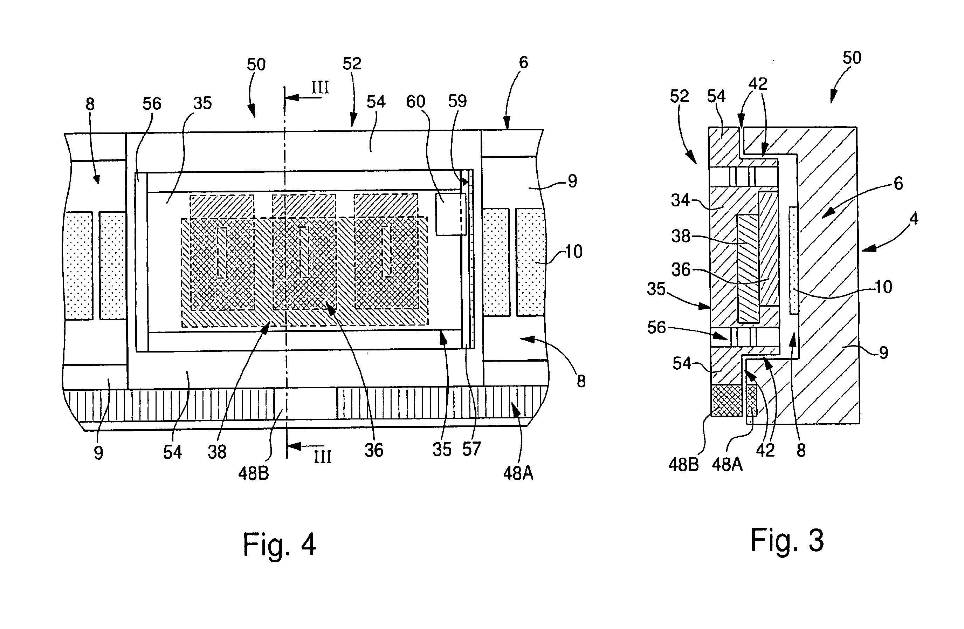

Eine zweite Ausführungsform eines erfindungsgemäßen Roboters ist in den Fig. 3 und 4 dargestellt. Die bereits vorher beschriebenen Bezugszeichen werden hier nicht erneut im Einzelnen beschrieben.

Die zweite Ausführungsform der Erfindung unterscheidet sich im Wesentlichen von der ersten Ausführungsform durch die Tatsache, dass jedes der zwei gelenkigen Elemente des Roboters 50 einen Arm aufweist, der an einem beweglichen Teil 52 mit einem Rahmen 54, der entlang der Kreisbahn 8 rotatorisch geführt wird, sowie einem mittleren Teil 35, der im Inneren dieses Rahmens angeordnet ist, angebracht ist, um eine vertikale Verlagerung erfahren zu können. Unter der vertikalen Verlagerung wird hier eine Verlagerung entlang der Drehachse des beweglichen Teils 52 verstanden, wobei diese Drehachse durch den Stator 6 definiert ist. Der mittlere Teil 35 wird durch zwei lineare Lager 56 und 57 geführt. Um die Position dieses mittleren Teils entlang der Richtung der Drehachse des kreisförmigen Motors zu bestimmen, ist eine Messvorrichtung vorgesehen, die aus einem Lineal 59 und einem Lesekopf 60 gebildet ist. Die Winkelverlagerung des Rahmens 54 wird durch ein kreisförmiges Lineal 48A, das einem Lesekopf 48B zugeordnet ist, gemessen.

Gemäß einem speziellen Merkmal dieser Ausführungsform werden die rotatorische Verlagerung des beweglichen Teils 52 und die Verlagerung des mittleren Teils 35 relativ zum Rahmen 54 entlang der Richtung der Drehachse alle beide durch dieselbe Vielzahl von Spulen 36 erzeugt. In der in Fig. 4 dargestellten Variante umfasst der mittlere Teil 35 eine Vielzahl von Spulen (vorzugsweise ein Vielfaches von drei), die in exzentrischer Weise relativ zu den Permanentmagneten 10 des kreisförmigen Magnetweges angeordnet sind. Diese Spulen sind so angeordnet, dass ihre unteren Segmente im Allgemeinen senkrecht zur Drehachse des kreisförmigen Motors angeordnet sind und gegenüber den Permanentmagneten 10 liegen. Die oberen Segmente der Spulen dürfen nicht den Permanentmagneten 10 gegenüberliegen. Durch diese Anordnung ermöglichen dieselben Spulen 36, die Gesamtheit des rotatorisch entlang der Kreisbahn 8 beweglichen Teils 52 zu betätigen und auch den mittleren Teil entlang der Richtung der Drehachse dieses beweglichen Teils 52 zu verlagern. Der Fachmann kann auf die Lehre des Dokuments WO 2007/026270 für die Steuerung der Spulen 36 Bezug nehmen.

Es ist zu beachten, dass in einer nicht dargestellten Ausführungsvariante die Spulen in exzentrischer Weise in Bezug auf die Permanentmagnete 10 angeordnet sein können, wobei die oberen Segmente gegenüber diesen Magneten liegen, während die unteren Segmente zumindest größtenteils in einem Bereich liegen, der nicht auf diese Magnete überlagert ist.

Gemäß einem weiteren zusätzlichen Merkmal der hier beschriebenen zweiten Ausführungsform ist das ferromagnetische Stück 38, das in den Träger 34 integriert ist, der den mittleren Teil 35 bildet, in exzentrischer Weise in Bezug auf die Magnete 10 angeordnet, wenn dieser mittlere Teil beispielsweise in der Mitte des durch den Rahmen 54 definierten Fensters liegt. In Anbetracht der magnetischen Anziehung der Magnete an das ferromagnetische Stück 38 definiert dieses ferromagnetische Stück ein Mittel zur Kompensation der auf den beweglichen mittleren Teil 35 ausgeübten Gravitationskraft. Das ferromagnetische Stück 38 ist somit relativ zu den Permanentmagneten 10 derart angeordnet, dass seine Ruheposition, die beispielsweise einer mittleren Position des mittleren Teils 35 entspricht, ohne Speisung der Spulen 36 bewahrt wird, was eine Verringerung der Joule-Verluste in den Spulen ermöglicht. Die durch die Magnete ausgeübte Kraft kompensiert genau in dieser Ruheposition die dem mittleren Teil 35 eigene Schwerkraft sowie jene des Arms, des Unterarms und des Endteils des SCARA-Roboters.

Es ist zu bemerken, dass der Arm des gelenkigen Elements, das dem beweglichen Teil 52 zugeordnet ist, offensichtlich am mittleren Teil 35 befestigt ist, so dass dieser Arm eine Drehbewegung sowie eine lineare vertikale Verlagerung erfahren kann. Die zweite Ausführungsform ermöglicht es folglich, die Struktur des Endteils 20 zu vereinfachen, der nicht mehr eine eigene vertikale lineare Bewegung bewirken können muss.

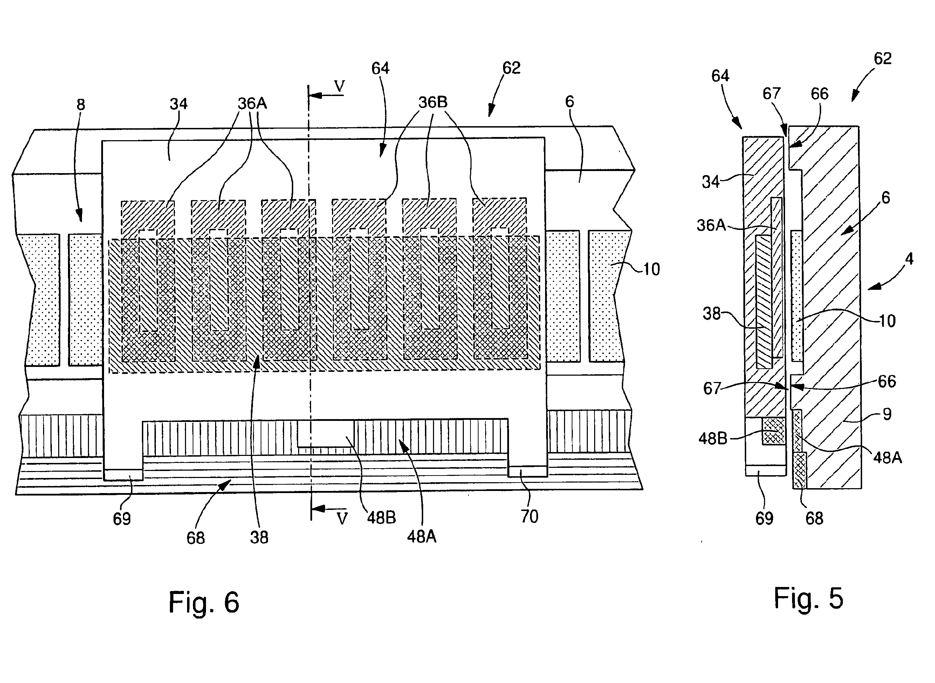

In den Fig. 5 und 6 ist eine dritte Ausführungsform eines parallelen Roboters gemäß der Erfindung dargestellt. Die bereits vorher beschriebenen Bezugszeichen werden hier nicht erneut im Einzelnen beschrieben.

In dieser dritten Ausführungsform ist jeder bewegliche Teil 64, der einem gelenkigen Element des Roboters 62 zugeordnet ist, in der Lage, eine Verlagerung gemäß zwei Freiheitsgraden an einer zylindrischen Oberfläche 66 in zwei Teilen, die jeweils gegenüber dem unteren Teil und dem oberen Teil des Trägers 34 des beweglichen Teils 64 liegen, zu erfahren. Zwischen der zylindrischen Oberfläche 66 und der entsprechenden zylindrischen Oberfläche des Trägers 34 ist ein Luftlager 67 vorgesehen. Diese Anordnung ermöglicht folglich dem beweglichen Teil 64, sich an einer zylindrischen Oberfläche zu verlagern, d. h. eine Drehbewegung gemäß der Drehachse des kreisförmigen Motors erfahren zu können und auch eine lineare Verlagerung entlang der Richtung dieser Drehachse zu erfahren.

Wie in der zweiten Ausführungsform umfasst der bewegliche Teil 64 Spulen 36A und 36B, die in exzentrischer Weise in Bezug auf die Permanentmagnete 10 des magnetischen Weges 8 angeordnet sind. Diese Spulen ermöglicht es, den beweglichen Teil 64 gemäß seiner zwei Freiheitsgrade anzutreiben. Ebenso ist das ferromagnetische Stück 38, das zur Rückkehr des Magnetflusses der Magnete dient, in exzentrischer Weise nach unten in Bezug auf diese Magnete angeordnet. Das ferromagnetische Stück 38 dient somit auch zum Kompensieren der Schwerkraft, die auf den beweglichen Teil 64 ausgeübt wird, sowie jene des Arms, des Unterarms und des Endteils des SCARA-Roboters. In der zweiten Ausführungsform hätte nur der mittlere Teil diese Kompensation der Schwerkraft, während in der hier beschriebenen dritten Ausführungsform das ferromagnetische Stück 38 derart in Bezug auf die Magnete 10 angeordnet ist, dass die Anziehungskraft der Magnete auf dieses magnetische Stück die Schwerkraft der Gesamtheit des beweglichen Teils 64 in seiner Ruheposition entlang der Richtung der Drehachse des kreisförmigen Motors des Roboters 62 kompensiert. Dies ermöglicht es, die Joule-Verluste in den Spulen zu verringern.

In Anbetracht dessen, dass der bewegliche Teil 64 aus einem zusammenhängenden Block gebildet ist, der Bewegungen an einer zylindrischen Oberfläche erfahren kann, ist es erforderlich, Mittel vorzusehen, die dazu dienen zu vermeiden, dass dieser bewegliche Teil 64 eine Kippbewegung, d. h. eine Drehbewegung gemäß einer radialen Achse des Stators 6, erleidet. Dazu ist gemäß der Erfindung vorgesehen, zwei Gruppen von Spulen 36A und 36B anzuordnen, die in unabhängiger Weise gesteuert werden, um es zu ermöglichen, ein Kraftmoment entlang einer radialen Achse des Stators zu erzeugen, um es zu ermöglichen, die Winkelposition des beweglichen Teils relativ zu einer derartigen radialen Achse zu steuern und somit die Bearbeitungsachse der zylindrischen Oberfläche 66 zur Bearbeitungsachse der entsprechenden zylindrischen Oberflächen des Trägers 34 des beweglichen Teils 62 parallel zu halten. Um ein Kippen des beweglichen Teils 64 zu vermeiden und folglich seine räumliche Orientierung an der zylindrischen Oberfläche 66 zu bewahren, ist jeder bewegliche Teil 64 zwei linearen Sensoren für die Verlagerung entlang der Richtung der Drehachse des kreisförmigen Motors zugeordnet. Diese zwei linearen Sensoren sind durch dasselbe Lineal 68 bzw. zwei Leseköpfe 69 und 70 gebildet. Die Steuermittel der zwei Gruppen von Spulen 36A und 36B wirken mit den zwei Leseköpfen 69 und 70 der zwei jeweiligen Sensoren zusammen, um die vorstehend beschriebene Regelung zu bewirken. Eine derartige Regelung ist beispielsweise im Patent US 6 949 733 beschrieben, das Codierer verwendet, die manchmal 1 D+ genannt werden und deren Lineal von einem speziellen Gravurverfahren profitiert, das eine Längs- und Quereinteilung an demselben Träger zuordnet, wobei folglich die Lineale 48A und 68 in ein einziges Element kombiniert werden.

Für den Fachmann ist es klar, dass die drei Ausführungsformen keineswegs begrenzend sind und dass insbesondere die Position der Spulen und der Magnete umgekehrt werden kann, um feste Spulen und bewegliche Magnete zu verwenden, um die Verkabelung zu erleichtern.

## Patentansprüche

1. Paralleler Roboter (2; 50; 62) des SCARA-Typs mit:
- einem Rumpf (4),
- zwei gelenkigen Elementen (12, 14), die jeweils aus einem Arm (16, 18) und einem Unterarm (17, 19) gebildet sind, die durch ein Gelenk (28, 29) verbunden sind, wobei diese zwei gelenkigen Elemente um ein und dieselbe geometrische Achse (26) drehbar angebracht sind,
- einem Endteil (20), mit dem in gelenkiger Weise die zwei jeweiligen äußeren Enden der zwei Unterarme verbunden sind,
**dadurch gekennzeichnet, dass** die zwei gelenkigen Elemente jeweils an zwei ringförmigen Segmenten (22, 24; 52; 64) angebracht sind, die jeweils zwei bewegliche Teile eines kreisförmigen Motors bilden, dessen Stator (6) zumindest teilweise den Rumpf bildet, wobei diese zwei beweglichen Teile ein und derselben Kreisbahn (8) dieses Stators zugeordnet sind.

2. Roboter nach Anspruch 1, **dadurch gekennzeichnet, dass** die zwei beweglichen Teile des kreisförmigen Motors durch ein und dieselbe Führung (42; 67) geführt werden.

3. Roboter nach Anspruch 1 oder 2, **dadurch gekennzeichnet, dass** der kreisförmige Motor ein Motor mit Permanentmagneten (10) ist, die die Kreisbahn (8) des Stators bilden, wobei jeder der zwei beweglichen Teile eine Vielzahl von Spulen (36; 36A und 36B) und ein ferromagnetisches Stück (38) umfasst, das zum Schließen des Magnetflusses der Permanentmagnete und auch zum Erzeugen einer magnetischen Anziehungskraft zwischen diesem beweglichen Teil und der Kreisbahn dient, so dass das ringförmige Segment, das diesen beweglichen Teil bildet, durch die magnetische Anziehungskraft vorgespannt wird.

4. Roboter nach Anspruch 3, **dadurch gekennzeichnet, dass** jeder bewegliche Teil einem Luftlager (42; 67) zugeordnet ist.

5. Roboter nach Anspruch 3 oder 4, **dadurch gekennzeichnet, dass** jeder der zwei beweglichen Teile (52) einen Rahmen (54) umfasst, der rotatorisch entlang der Kreisbahn (8) geführt wird, in dessen Innerem ein mittlerer Teil (35) angeordnet ist, der entlang der geometrischen Achse (26) beweglich ist.

6. Roboter nach Anspruch 5, **dadurch gekennzeichnet, dass** die rotatorische Verlagerung und die Verlagerung entlang der geometrischen Achse alle beide durch die Vielzahl von Spulen (36) erzeugt werden, die in exzentrischer Weise in Bezug auf die Permanentmagnete (10) angeordnet sind und die untere oder obere Segmente aufweisen, die im Allgemeinen senkrecht zur geometrischen Achse orientiert sind und gegenüber den Permanentmagneten liegen.

7. Roboter nach Anspruch 5 oder 6, **dadurch gekennzeichnet, dass** das ferromagnetische Stück (38) ein Mittel zur Kompensation der auf jeden beweglichen mittleren Teil (35) ausgeübten Gravitationskraft definiert.

8. Roboter nach Anspruch 4, **dadurch gekennzeichnet, dass** das Luftlager (67) angeordnet ist, um eine Verlagerung mit zwei Freiheitsgraden von jedem beweglichen Teil (64) an einer zylindrischen Oberfläche (66) zu ermöglichen.

9. Roboter nach Anspruch 8, **dadurch gekennzeichnet, dass** die Vielzahl von Spulen zwei Gruppen von Spulen (36A und 36B) umfasst, die in unabhängiger Weise gesteuert werden, und dass jeder bewegliche Teil (64) zwei linearen Sensoren (68, 69 und 70) für die Verlagerung entlang der geometrischen Achse (26) zugeordnet ist, wobei Steuermittel der zwei Gruppen von Spulen mit den zwei linearen Sensoren zusammenwirken, um die räumliche Orientierung dieses beweglichen Teils auf der Kreisbahn (8) zu bewahren.

10. Roboter nach Anspruch 3, 4, 8 oder 9, **dadurch gekennzeichnet, dass** das ferromagnetische Stück (38) ein Mittel zur Kompensation der auf jeden beweglichen Teil (64) ausgeübten Gravitationskraft definiert.

## Claims

1. SCARA-type parallel robot (2; 50; 62) having:
- a body (4),
- two articulated elements (12, 14) which are each formed from an arm (16, 18) and a lower arm (17, 19), which arm and lower arm are connected by an articulated joint (28, 29), with these two articulated elements being mounted such that they can rotate about one and the same geometric axis (26),
- an end part (20) to which the two respective outer ends of the two lower arms are connected in an articulated manner,
**characterized in that** the two articulated elements are each mounted on two annular segments (22, 24; 52; 64) which each form two moving parts of a circular motor, the stator (6) of this motor at least partially forming the body, with these two moving parts being associated with one and the same circular path (8) of this stator.

2. Robot according to Claim 1, **characterized in that** the two moving parts of the circular motor are guided by one and the same guide (42; 67).

3. Robot according to Claim 1 or 2, **characterized in that** the circular motor is a motor with permanent magnets (10) which form the circular path (8) of the stator, with each of the two moving parts comprising a large number of coils (36; 36A and 36B) and a ferromagnetic piece (38) which serves to close the magnetic flux circuit and also to generate a magnetic attraction force between this moving part and the circular path, so that the annular segment which forms this moving part is prestressed by the magnetic attraction force.

4. Robot according to Claim 3, **characterized in that** each moving part is associated with an air bearing (42; 67).

5. Robot according to Claim 3 or 4, **characterized in that** each of the two moving parts (52) comprises a frame (54) which is guided in a rotary manner along the circular path (8), a central part (35) which can be moved along the geometric axis (26) being arranged in the interior of the said frame.

6. Robot according to Claim 5, **characterized in that** the rotary displacement and the displacement along the geometric axis are all generated by the large number of coils (36) which are arranged in an eccentric manner in relation to the permanent magnets (10) and which have lower and upper segments which are oriented generally perpendicular to the geometric axis and are situated opposite the permanent magnets.

7. Robot according to Claim 5 or 6, **characterized in that** the ferromagnetic piece (38) defines a means for compensating the gravitational force which is exerted on each moving central part (35).

8. Robot according to Claim 4, **characterized in that** the air bearing (67) is arranged in order to allow displacement with two degrees of freedom of each moving part (64) on a cylindrical surface (66).

9. Robot according to Claim 8, **characterized in that** the large number of coils comprises two groups of coils (36A and 36B) which are controlled in an independent manner, and **in that** each moving part (64) has two associated linear sensors (68, 69 and 70) for the displacement along the geometric axis (26), with control means of the two groups of coils interacting with the two linear sensors in order to retain the spatial orientation of this moving part on the circular path (8).

10. Robot according to Claim 3, 4, 8 or 9, **characterized in that** the ferromagnetic piece (38) defines a means for compensating the gravitational force which is exerted on each moving part (64).

## Revendications

1. Robot parallèle (2 ; 50 ; 62) de type SCARA doté de :
- une coque (4) ;
- deux éléments articulés (12, 14) respectivement constitués d'un bras (16, 18) et d'un avant-bras (17, 19) reliés entre eux par une articulation (28, 29), lesdits deux éléments articulés étant disposés de façon à pouvoir tourner autour d'un seul et même axe géométrique (26) ;
- une partie d'extrémité (20) à laquelle les deux extrémités extérieures respectives des deux avant-bras sont reliées de façon articulée ;
**caractérisé en ce que** les deux éléments articulés sont respectivement placés contre deux segments de forme annulaire (22, 24 ; 52 ; 64) formant respectivement deux parties mobiles d'un moteur de forme circulaire dont le stator (6) forme au moins en partie la coque, les deux parties mobiles étant associées à une seule et même piste circulaire (8) de ce stator.

2. Robot selon la revendication 1, **caractérisé en ce que** les deux parties mobiles du moteur de forme circulaire sont guidées par le biais d'un seul et même élément de guidage (42 ; 67).

3. Robot selon la revendication 1 ou 2, **caractérisé en ce que** le moteur de forme circulaire est un moteur à aimants permanents (10) formant la piste circulaire (8) du stator, chacune des deux parties mobiles comprenant une pluralité de bobines (36 ; 36A et 36B) et une pièce ferromagnétique (38) servant à la fermeture du flux magnétique des aimants permanents ainsi qu'à la production d'une force d'attraction magnétique entre cette partie mobile et la piste circulaire, de sorte que le segment de forme annulaire formant cette partie mobile est précontraint par la force d'attraction magnétique.

4. Robot selon la revendication 3, **caractérisé en ce que** chaque partie mobile est associée à un support pneumatique (42 ; 67).

5. Robot selon la revendication 3 ou 4, **caractérisé en ce que** chacune des deux parties mobiles (52) comprend un cadre (54) guidé en rotation le long de la piste circulaire (8) à l'intérieur de laquelle une partie centrale (35) mobile le long de l'axe géométrique (26) est disposée.

6. Robot selon la revendication 5, **caractérisé en ce que** le déplacement en rotation et le déplacement le long de l'axe géométrique sont tous deux produits par la pluralité de bobines (36) disposées de façon excentrée par rapport aux aimants permanents (10) et comportent des segments inférieurs ou supérieurs généralement orientés perpendiculairement à l'axe géométrique et reposant vis-à-vis de l'aimant permanent.

7. Robot selon la revendication 5 ou 6, **caractérisé en ce que** la pièce ferromagnétique (38) définit un moyen de compensation de la force gravitationnelle s'exerçant sur chaque partie centrale (35) mobile.

8. Robot selon la revendication 4, **caractérisé en ce que** le support pneumatique (67) est disposé de façon à permettre un déplacement selon deux degrés de liberté de chaque partie mobile (64) contre une surface cylindrique (66).

9. Robot selon la revendication 8, **caractérisé en ce que** la pluralité de bobines comprend deux groupes de bobines (36A et 36B) commandés de façon indépendante et que chaque partie mobile (64) est associée à deux capteurs linéaires (68, 69 et 70) pour le déplacement le long de l'axe géométrique (26), les moyens de commande des deux groupes de bobines interagissant avec les deux capteurs linéaires afin de conserver l'orientation dans l'espace de cette partie mobile sur la piste circulaire (8).

10. Robot selon la revendication 3, 4, 8 ou 9, **caractérisé en ce que** la pièce ferromagnétique (38) définit un moyen de compensation de la force gravitationnelle s'exerçant sur chaque partie mobile (64).
